Europäisches Patentamt

European Patent Office

Office européen des brevets

(19)

(11) Publication number: **0 243 860 B1**

## EUROPEAN PATENT SPECIFICATION

(12)

(45) Date of publication of patent specification: **15.07.92**   (51) Int. Cl.⁵: **G11B 5/70**, G11B 5/66

(21) Application number: **87105875.6**

(22) Date of filing: **22.04.87**

(54) **A multilayered vertical magnetic recording medium.**

(30) Priority: **29.04.86 US 857206**

(43) Date of publication of application:
**04.11.87 Bulletin 87/45**

(45) Publication of the grant of the patent:
**15.07.92 Bulletin 92/29**

(84) Designated Contracting States:
**DE FR GB IT**

(56) References cited:
**DE-A- 3 203 918**
**US-A- 4 632 883**

**PATENT ABSTRACTS OF JAPAN vol.10, no.
232 (P-486)(2288), 12th August 1986; & JP-
A-61 066 218 (MATSUSHITA) 05041986 (Cat.
A)**

**PATENT ABSTRACTS OF JAPAN vol. 9 no. 2
(P-325)(1725), 8th January 1985; & JP-A-59
151 335 (TOSHIBA) 29-08-1984**

**JOURNAL OF VACUUM SCIENCE & TECH-
NOLOGY vol.4,no.1, January/February 1986,
pages 1-13, New York, US; J.K. HOW-
ARD:"Thin films for magnetic recording
technology: A review"**

(73) Proprietor: **International Business Machines
Corporation
Old Orchard Road
Armonk, N.Y. 10504(US)**

(72) Inventor: **Ahlert, Richard Henry
1742 Ouimby Road
San Jose California 95122(US)**
Inventor: **Howard, James Kent
470 La Baree
Morgan Hill California 95037(US)**
Inventor: **Lim, Grace Su
3696 Deedham Drive
San Jose California 96825(US)**

(74) Representative: **Atchley, Martin John Waldeg-
rave
IBM United Kingdom Limited Intellectual
Property Department Hursley Park
Winchester Hampshire SO21 2JN(GB)**

## Description

This invention relates to a multilayered thin film metal alloy medium for vertical magnetic recording.

Cobalt-based alloys which are known as being capable for use in forming a horizontal magnetic recording medium include cobalt-nickel (CoNi), cobalt-rhenium (CoRe), cobalt-palladium (CoPd) and cobalt-platinum (CoPt). In such a medium, the cobalt alloy is formed as a hexagonal-close-packed (HCP) crystalline structure film on a substrate, or on an intermediate underlayer, so that the C-axis, i.e. the [002] axis, of the cobalt alloy film is either in the plane of the film or has a component in the plane of the film.

It has been found that, in the case of CoPt films used in a horizontal magnetic recording medium, the horizontal coercivity ($H_c$) is dependent upon the composition of the platinum, with the maximum $H_c$ occurring at approximately 20 atomic percent (at.%) platinum. See J. A. Aboaf, et al., "Magnetic Properties and Structure of Co-Pt Thin Films", IEEE Trans on Magnetics, MAG-19, 1514 (1983), and M. Kitada, et al., "Magnetic Properties of Sputtered Co-Pt Thin Films", J. Appl. Phys. 54 (12), December 1983, pp. 7089-7094. The horizontal coercivity and other properties of cobalt-platinum (CoPt) films have been reported by Opfer, et al. in an article entitled "Thin-Film Memory Disc Development," Hewlett-Packard Journal, November 1985, pp. 4-10.

In order to improve the coercivity of the CoPt magnetic film in certain types of media for horizontal magnetic recording, a chromium (Cr) or chromium alloy underlayer may be formed between a substrate and a CoPt magnetisable film layer. The use of a Cr underlayer in a CoPt thin film medium is described in the above-referenced article by Opfer, et al. and in EP-A-145157. The use of a chromium-cobalt (CrCo) alloy as an underlayer for various types of magnetisable materials, including CoPt, is suggested in EP-A-140513.

In contrast to a thin film medium for horizontal magnetic recording a thin film metal alloy medium for vertical magnetic recording is typically a single layer of a magnetisable material having an ordered crystalline structure with perpendicular magnetic anisotropy. The conventional material used for a vertical recording medium is a cobalt-chromium (CoCr) alloy which is sputter-deposited on a substrate, or on an intermediate nucleating layer deposited on the substrate, to form a film having an HCP crystalline structure with the C-axis oriented generally perpendicular to the substrate. The magnetic properties of a thin film metal alloy vertical recording medium made with various substrates, for example a titanium (Ti) nucleating layer and a single-layer CoCr perpendicular magnetisable film, are described by Kobayashi, et al. in "High Density Perpendicular Magnetic Recording on Rigid Disks", Fujitsu Scientific & Technical Journal, Vol. 19, No. 1 (March 1983), pp. 99-126. GB-A-2125069, describes a thin film medium for vertical magnetic recording which uses a single layer of cobalt-chromium-platinum (CoCrPt), with Pt comprising between 1 and 5 at.%.

The object of the present invention is to provide an improved magnetic recording medium for vertical magnetic recording.

The present invention relates to a magnetic recording medium comprising a substrate and a magnetisable film structure having a substantially hexagonal-close-packed (HCP) crystalline structure supported on the substrate.

According to the invention the medium is characterised in that the film structure comprises a plurality of film layers, each film layer comprising

a first non-magnetisable nucleating film having a substantially hexagonal-close-packed (HCP) crystalline structure, and

a second magnetisable film of an alloy including cobalt and an element selected from the group consisting of platinum, nickel, rhenium and palladium, formed on the nucleating film and having a predetermined thickness so that it has an HCP crystalline structure with perpendicular magnetic anisotropy.

While the perpendicular coercivity of a single layer is insufficient to provide a medium suitable for vertical magnetic recording, the above multilayered film structure, wherein each layer includes a magnetisable film with its C-axis oriented perpendicular to the film plane, results in s medium with sufficient coercivity and other magnetic properties to make it suitable for vertical magnetic recording.

In one embodiment the multilayered structure has at least three layers, each layer comprising a nucleating film of an intermetallic cobalt-tungsten compound ($Co_3W$) of 150 Angstrom units ($1.5 \times 10^{-8}$ m) thickness and a CoPt magnetic film of 250 Angstrom units ($2.5 \times 10^{-8}$ m) thickness.

In order that the invention may be more readily understood an embodiment will now be described with reference to the accompanying drawings, in which:

Fig 1 is a graph illustrating the horizontal coercivity of a magnetic recording medium including a CoPt film formed on a CrCo nucleating film formed on a Si substrate, as a function of CoPt film thickness,

Fig 2 is an X-ray diffraction curve for a 250 Angstrom units ($2.5 \times 10^{-8}$ m) thick CoPt film formed on a 150 Angstrom units ($1.5 \times 10^{-8}$ m) thick Ti nucleating film formed on a Si substrate,

Fig. 3 is a graph illustrating the horizontal (in-plane) coercivity of a 250 Angstrom units $(2.5 \times 10^{-8} \text{m})$ thick CoPt film over a 150 Angstroms thick Ti nucleating film formed in a Si substrate as a function of substrate deposition temperature,

Fig. 4 is a side view in cross-sectional of a representation of a three-layer film magnetic recording medium according to the present invention, and

Fig. 5 illustrates the B-H loop for the three-layer film medium depicted in Fig. 4.

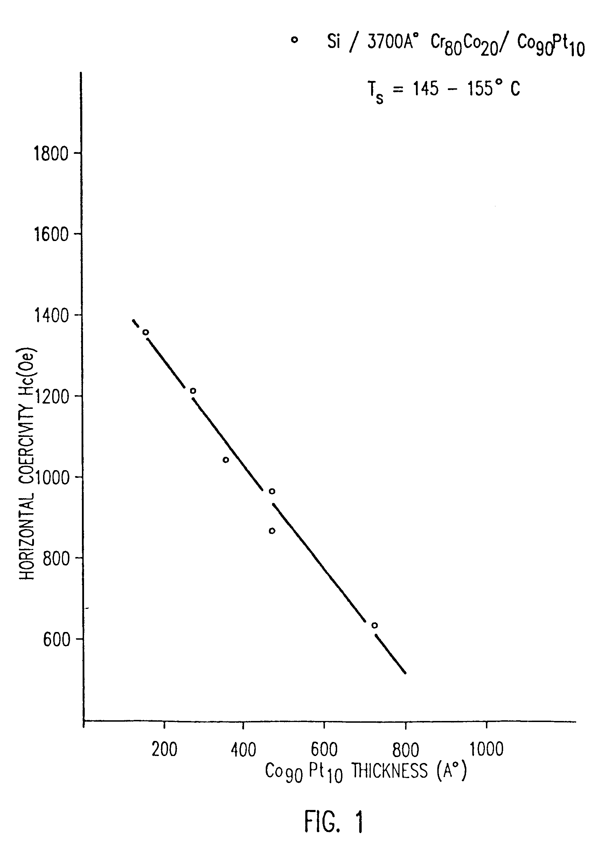

Thin films of cobalt-platinum (CoPt) for use in forming a horizontal magnetic recording medium are typically deposited on a nucleating underlayer formed between a substrate of silicon (Si) and the CoPt magnetisable layer. In such a magnetic recording medium, the nucleating layer enhances the HCP (hexagonal-close-packed) crystalline growth of the CoPt magnetisable layer, which results in a CoPt film with a component of the C-axis in the plane of the film. The horizontal coercivity of such CoPt films is a function of the deposition temperature, the type of underlayer and the thickness of the CoPt film. The graph of Fig. 1 illustrates the general relationship between horizontal coercivity of a CoPt film, with 10 at.% platinum ($Co_{90}Pt_{10}$), as a function of CoPt film thickness. The data shown in Fig. 1 is for a thin film magnetic recording medium in which the substrate is single crystal semiconductor grade silicon and the underlayer is a 3700 Angstrom units $(3.7 \times 10^{-7} \text{m})$ thick film of chromium-cobalt, with 20 at.% cobalt ($Cr_{80}Co_{20}$). The deposition of the $Cr_{80}Co_{20}$ underlayer and $Co_{90}Pt_{10}$ magnetisable film was by DC magnetron sputter deposition at an Argon pressure of $2 \times 10^{-3}$ Torr (0.266 Pa) and a substrate temperature of approximately 145 to 155°C. An X-ray diffraction analysis of such a medium depicts reflection peaks corresponding to the (110) plane of the CoPt film and the (200) plane of the CrCo underlayer, thereby confirming the strong in-plane orientation of the C-axis of the HCP CoPt film in such a medium.

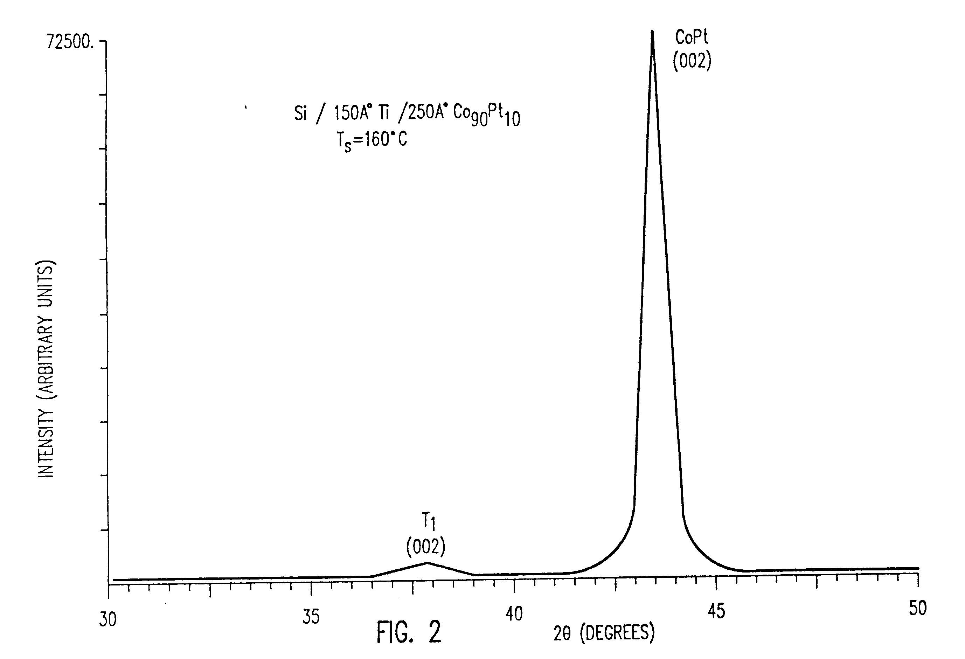

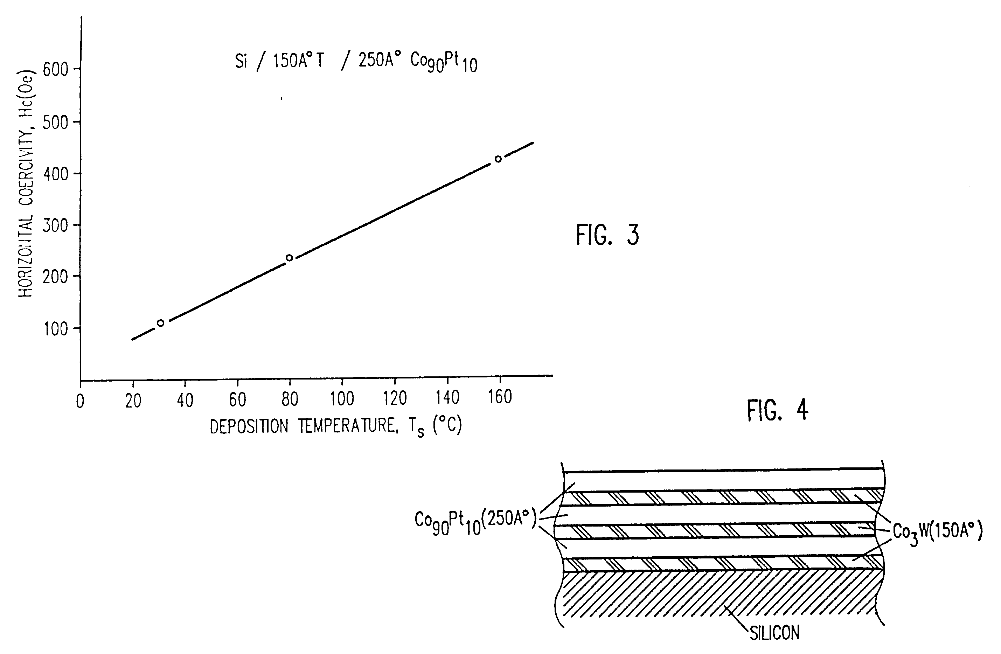

As part of the development of a multilayered vertical recording medium in accordance with the present invention, a single layer structure was first made by forming a $Co_{90}Pt_{10}$ film of 250 Angstrom units $(2.5 \times 10^{-8} \text{m})$ thickness on a 150 Angstrom units $(1.5 \times 10^{-8} \text{m})$ thick titanium (Ti) film on a silicon substrate. The films were formed by DC magnetron sputtering at a substrate deposition temperature of 160°C and an Argon pressure of $2 \times 10^{-3}$ Torr (0.266 Pa). An X-ray diffraction analysis of the medium is shown in Fig. 2. The peak at $2\theta = 37.9°$ corresponds to a reflection from the (002) plane of the Ti film and the peak at $2\theta = 43.6°$ corresponds to a reflection from the (002) plane of the CoPt film. Thus Fig. 2 confirms that when the 250 Angstrom units $(2.5 \times 10^{-8} \text{m})$ thick CoPt film is formed on the HCP Ti film, the preferred orientation of the C-axis of the HCP CoPt film is perpendicular to the plane of the film. The horizontal coercivity of the film illustrated in Fig. 2 and two other identical films formed at lower substrate deposition temperatures is shown in Fig. 3. The very low value for the horizontal coercivity depicted in Fig. 3 confirms the perpendicular magnetic anisotropy of the C-axis perpendicular preferred orientation structure composed of a Ti film and a 250 Angstrom units $(2.5 \times 10^{-8} \text{m})$ thick $Co_{90}Pt_{10}$ magnetisable film. As the deposition temperature is increased (Fig. 3), the in-plane coercivity increases, i.e. the perpendicular magnetic anisotropy is diminished. An M-H loop measurement for the Si/150 Å Ti/250 Å $Co_{90}Pt_{10}$ structure showed a perpendicular coercivity of approximately 200-300 Oe (Oersteds). Thus a Ti nucleating film can sustain a perpendicular C-axis orientation (Fig. 2) and perpendicular magnetic anisotropy in thin (less than or equal to approximately 250 Angstrom units $(2.5 \times 10^{-8} \text{m})$) $Co_{90}Pt_{10}$ films.

CoPt films of 250 Angstrom units $(2.5 \times 10^{-8} \text{m})$ thickness were also sputter deposited on other HCP nucleating films, including an intermetallic compound of cobalt and tungsten ($Co_3W$). The use of $Co_3W$ as a nucleating film for vertical magnetic recording medium is described in EP-A-220597.

It has been discovered that, in the case of a CoPt film formed on an HCP nucleating film, the preferred orientation of the C-axis of the HCP CoPt film ceases being perpendicular to the film plane as the thickness of the CoPt film increases above approximately 250 Angstrom units $(2.5 \times 10^{-8} \text{m})$. As the CoPt film grows in thickness and develops a component of the C-axis in its plane, the film has horizontal magnetic anisotropy. However, if the thickness of the CoPt film formed on the HCP film is maintained less than approximately 250 Angstrom units $(2.5 \times 10^{-8} \text{m})$ then the preferred orientation of the C-axis is perpendicular to the plane, even though the perpendicular coercivity of such a single film is insufficient to function as a magnetic recording medium.

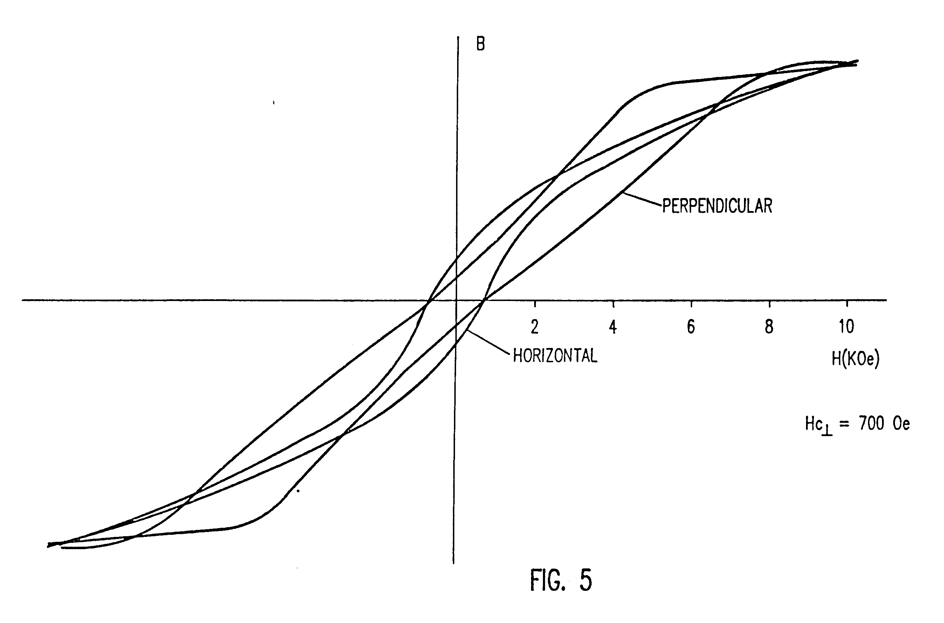

In accordance with the present invention a laminated or multilayered film structure for a magnetic recording medium was formed in which each layer in the structure comprised a 150 Angstrom units $(1.5 \times 10^{-8} \text{m})$ thick $Co_3W$ film and a 250 Angstrom units $(2.5 \times 10^{-8} \text{m})$ thick $Co_{90}Pt_{10}$ film. These layers are supported on a silicon (Si) substrate. In this multilayered film structure, the perpendicular coercivity is substantially greater than in a single layer structure. A sectional view of a three layer structure according to the present invention is illustrated in Fig. 4. Fig. 5 is a B-H loop of the three-layer structure illustrated in Fig. 4. The perpendicular coercivity is 700 Oersteds (Oe), which is considerably greater than the coercivity for a single CoPt film formed on a single HCP nucleating film, e.g. 200-300 Oe for a 250 Angstrom units ($2.5 \times 10^{-8}$ m) thick $Co_{90}Pt_{10}$ film on a 150 Angstrom units ($1.5 \times 10^{-8}$ m) thick Ti film.

Thus a laminated or multilayered structure in which CoPt films are alternated with highly oriented HCP nucleating films results in a suitable structure for use in a vertical magnetic recording medium. The number of layers in the laminated structure, the thickness of each layer and the deposition temperature can be varied to optimise the vertical magnetic recording performance of the medium. For example, the perpendicular and in-plane coercivities of the structure can be adjusted by changing the thicknesses of the nucleating film and the CoPt film.

Suitable HCP nucleating films in addition to Ti and $Co_3W$ are rhenium (Re), osmium (Os), ruthenium (Ru), hafnium (Hf), zirconium (Zr), and the beta phase of tantalum ($\beta$-Ta). The use of $\beta$-Ta as a nucleating film for a vertical magnetic recording media is described in EP-A-216610.

While Pt is the preferred element as part of the cobalt-based alloy forming the magnetisable film in each layer of the laminated structure, other elements suitable for use in the cobalt-based alloy are nickel (Ni), rhenium (Re) and palladium (Pd). All of these elements are known as capable for use in cobalt-based alloys for horizontal magnetic recording.

In those applications of the vertical recording medium where it is desired to utilise pole heads on the same side of the medium, such as in a flexible disk application, it is necessary to have an underlayer between the silicon substrate and the multilayered film structure to provide a magnetic flux return path in the medium. A conventional underlayer for this purpose is a layer of nickel-iron (NiFe).

The above description and drawings relate only to the inventive structures which form a part of the vertical magnetic recording medium described, and not to the conventional well-known portions of the medium and the medium fabrication process. For example, in the fabrication of a thin film metal alloy magnetic recording medium, it is known to provide a protective overcoat, such as a sputtered carbon film, over the magnetisable film and, in certain instances, to provide an adhesion layer, such as sputtered titanium film, between this protective overcoat and the magnetisable film. In a medium according to the present invention, the adhesion layer and protective overcoat would be formed over the uppermost layer in the multilayered film structure.

## Claims

1. A magnetic recording medium comprising a substrate and a magnetisable film structure having a substantially hexagonal-close-packed (HCP) crystalline structure supported on said substrate,

   characterised in that said film structure comprises a plurality of film layers, each film layer comprising

   a first non-magnetisable nucleating film having a substantially hexagonal-close-packed (HCP) crystalline structure, and

   a second magnetisable film of an alloy including cobalt and an element selected from the group consisting of platinum, nickel, rhenium and palladium, formed on said nucleating film and having a predetermined thickness so that it has an HCP crystalline structure with perpendicular magnetic anisotropy.

2. A magnetic recording medium as claimed in claim 1 characterised in that the non-magnetisable nucleating film in each layer is made from an intermetallic compound of cobalt and tungsten (CoW) and the magnetisable film in each layer is made from an alloy of cobalt and platinum (CoPt).

3. A magnetic recording medium as claimed in claim 2 characterised in that the non-magnetisable nucleating film in each layer is made from an intermetallic compound of cobalt and tungsten ($Co_3W$) and the magnetisable film in each layer is made from an alloy of cobalt and platinum ($Co_{90}Pt_{10}$).

4. A magnetic recording medium as claimed in claim 1 characterised in that the non-magnetisable nucleating film in each film layer is made from a material selected from the group consisting of titanium (Ti), an intermetallic compound of cobalt and tungsten (CoW), rhenium (Re), osmium (Os), ruthenium (Ru), hafnium (Hf), zirconium (ZR), and the beta phase of tantalum.

5. A magnetic recording medium as claimed in any one of the preceding claims characterised in that, in each film layer, the non-magnetisable nucleating film has a thickness of the order of 150 Angstrom units ($1.5 \times 10^{-8}$ m) and the magnetisable film has a thickness of the order of 250 Angstrom units ($2.5 \times 10^{-8}$ m).

6. A magnetic recording medium as claimed in any one of the preceding claims characterised in that it comprises a protective overcoat formed on said magnetisable film structure.

**Revendications**

1. Support d'enregistrement magnétique comprenant un substrat et une structure pelliculaire magnétisable ayant une structure cristalline fortement comprimée hexagonale (HCP) supportée par ledit substrat,

caractérisé en ce que ladite structure pelliculaire comprend une pluralité de couches pelliculaires, chaque couche pelliculaire comprenant

un premier film de nucléation non magnétisable ayant une structure cristalline fortement comprimée hexagonale (HCP), et

un deuxième film magnétisable fait dans un alliage de cobalt et d'un élément sélectionné dans le groupe de platine, nickel, rhénium et palladium, formé sur ledit film de nucléation et ayant une épaisseur prédéterminée de sorte qu'il ait une structure cristalline HCP avec une anisotropie magnétique perpendiculaire.

2. Support d'enregistrement magnétique selon la revendication 1, caractérisé en ce que le film de nucléation non magnétisable dans chaque couche est fait dans un composé intermétallique de cobalt et de tungstène (CoW), et le film magnétisable est fait dans un alliage de cobalt et de platine (CoPt).

3. Support d'enregistrement magnétique selon la revendication 2, caractérisé en ce que le film de nucléation non magnétisable dans chaque couche est fait dans un composé intermétallique de cobalt et de tunsgtène ($Co_3W$), et le film magnétisable dans chaque couche est fait dans un alliage de cobalt et de platine ($Co_{90}Pt_{10}$);

4. Support d'enregistrement magnétique selon la revendication 1, caractérisé en ce que le film de nucléation non magnétisable dans chaque couche pelliculaire est fait dans un matériau sélectionné dans le groupe titane (Ti), composé intermétallique de cobalt et tungstène (CoW), rhénium (Re), osmium (Os), ruthénium (Ru), hafnium (Hf), zirconium (Zr), et la phase bêta du tantale.

5. Support d'enregistrement magnétique selon l'une quelconque des revendications précédentes, caractérisé en ce que, dans chaque couche pelliculaire, le film de nucléation non magnétisable a une épaisseur de l'ordre de 150 angströms ($1.5 \times 10^{-8}$ m), et le film magnétisable a une épaisseur de l'ordre de 250 angströms ($2.5 \times 10^{-8}$ m).

6. Support d'enregistrement magnétique selon l'une quelconque des revendications précédentes, caractérisé en ce qu'il comprend à sa surface un revêtement formé sur ladite structure pelliculaire magnétisable.

**Patentansprüche**

1. Magnetisches Aufzeichnungsmedium mit einem Substrat und einem magnetisierbaren Filmaufbau, der eine von dem Substrat getragene im wesentlich hexagonal dichtest gepackte (HCP) Kristallstruktur besitzt,

dadurch gekennzeichnet, daß der Filmaufbau aus einer Mehrzahl von Filmschichten besteht, wobei jede Filmschicht

einen ersten, nicht magnetischen, nukleierenden Film mit im wesentlichen hexagonal dichtest gepackter (HCP) Kristallstruktur aufweist, sowie

einen zweiten, magnetisierbaren Film aus einer Legierung, welche Kobalt und ein Element, ausgewählt aus der aus Platin, Nickel, Rhenium und Palladium bestehenden Gruppe, enthält, der auf dem nukleierenden Film ausgebildet ist und eine vorbestimmte Dicke hat, sodaß er eine HCP-Kristallstruktur mit magnetischen Queranisotropie besitzt.

2. Magnetisches Aufzeichnungsmedium nach Anspruch 1, dadurch gekennzeichnet, daß der nicht magnetisierbare, nukleierende Film in jeder Schicht aus einer intermetallischen Verbindung von Kobalt und Wolfram (CoW) und der magnetisierbare Film in jeder Schicht aus einer Verbindung von Kobalt und Platin (CoPt) hergestellt ist.

3. Magnetisches Aufzeichnungsmedium nach Anspruch 2, dadurch gekennzeichnet, daß der nicht magnetisierbare, nukleierende Film in jeder Schicht aus einer intermetallischen Verbindung von Kobalt und Wolfram ($Co_3W$) und der magnetisierbare Film in jeder Schicht aus einer Verbindung von Kobalt und Platin ($Co_{90}Pt_{10}$) hergestellt ist.

4. Magnetisches Aufzeichnungsmedium nach Anspruch 1, dadurch gekennzeichnet, daß der nicht magnetisierbare, nukleierende Film in jeder Filmschicht aus einem Material hergestellt ist, das aus der Gruppe ausgewählt ist, die aus Titan (Ti), einer intermetallischen Verbindung von Kobalt und Wolfram (CoW), Rhenium (Re), Osmium (Os), Ruthenium (Ru), Hafnium (Hf), Zirkon (Zr) und der Beta-Phase von Tantal besteht.

5. Magnetisches Aufzeichnungsmedium nach irgend einem der vorgehenden Ansprüche, dadurch gekennzeichneit, daß in jeder Filmschicht der nicht magnetisierbare, nukleierende Film eine Dicke in der Größe von 150 Angstrom-Einheiten ($1,5 \times 10^{-8}$ m) und der magnetisierbare Film eine Dicke in der Größe von 250 Angstrom-Einheiten ($2,5 \times 10^{-8}$ m) besitzt.

6. Magnetisches Aufzeichnungsmedium nach irgend einem der vorgehenden Ansprüche, dadurch gekennzeichnet, daß es einen auf dem magnetisierbaren Filmaufbau ausgebildeten Schutzüberzug besitzt.

FIG. 1

FIG. 2

Si / 150A° T / 250A° Co$_{90}$Pt$_{10}$

FIG. 3

FIG. 4

Co$_{90}$Pt$_{10}$(250A°)

Co$_3$W(150A°)

SILICON

FIG. 5